# EUROPEAN PATENT APPLICATION

(11) **EP 4 467 368 A1**
(43) Date of publication of application: **27.11.2024**
(21) Application number: 24177592.3
(22) Date of filing: 23.05.2024
(51) Int. Cl.: B60H 1/00, B60H 1/24, B60K 37/00

(54) **SYSTEM FOR TREATING AIR FOR A MOTOR VEHICLE AND MOTOR VEHICLE COMPRISING THE SAME**

(30) Priority: 25.05.2023 IT 202300010560
(71) Applicant: FERRARI S.p.A., 41100 Modena (IT)
(72) Inventor: FAVARETTO, Fabrizio, 41100 MODENA (IT)
(74) Representative: Studio Torta S.p.A.

(57) **Abstract**

System (10) for treating air for a motor vehicle (1), comprising a transversal structural element (11) adapted to be fixed to a frame (2) of the motor vehicle (1) or integrated into the frame (2), and a heat exchanger (16) integrated into or fixed to the structural element (11), wherein the heat exchanger (16) comprises first passages (18) adapted to be crossed by an air flow and is adapted to subject said air flow to a heat exchange as it crosses the first passages (18), and the first passages (18) are adapted to be fluidly connected to the passenger compartment (3) of the motor vehicle (1).

## Description

### CROSS-REFERENCE TO RELATED APPLICATIONS

This patent application claims priority from Italian patent application no. 102023000010560 filed on May 25, 2023, the entire disclosure of which is incorporated herein by reference.

### TECHNICAL FIELD

The invention relates to a system for treating air for a motor vehicle. The invention also relates to a motor vehicle comprising a system for treating air.

### BACKGROUND

Motor vehicles including heating, ventilation and air conditioning systems are well known. These systems - also called "HVAC" (Heating, Ventilation and Air conditioning) systems - allow, for example, the temperature and humidity inside the passenger compartment of motor vehicles to be adjusted, in order to improve the comfort for the occupants.

At the same time, in accordance with the provisions of certain laws, such systems periodically renew the air contained in the passenger compartment. Indeed, it has been observed that the formation of stale air inside the passenger compartment may indirectly be the cause of road accidents.

In general, the well-known automotive HVAC systems comprise a heat exchanger located behind the dashboard and a plurality of variously arranged openings through which the air from the heat exchanger is fed into the passenger compartment. In detail, the openings are fluidly connected to the heat exchanger by means of respective ducts.

The introduction of the heat exchanger-treated air through the openings and ducts can be improved in several respects.

Firstly, the outflow of the heat exchanger-treated air occurs in a concentrated manner through the openings and, therefore, the direction and source of the air flow entering the passenger compartment are poorly controllable. This adversely affects the comfort for the occupants of the passenger compartment.

Secondly, because the ducts are designed to guide the flow of air - and thus to make changes to its direction - along the path from the heat exchanger to the openings, they are frequently the source of vibration and noise phenomena. In addition, ducts generally have very complex shapes and are manufactured through costly moulding operations.

The combination of openings and ducts also takes up a very large amount of space and significantly limits the dashboard layout.

In the light of the above, there is a need to improve the well-known heating, ventilation and air conditioning systems of motor vehicles.

The object of the invention is to meet the above need, preferably in a simple and reliable way.

### DESCRIPTION OF THE INVENTION

The object is achieved by means of a system for treating air as defined in claim 1. The dependent claims define particular embodiments of the invention.

### BRIEF DESCRIPTION OF THE DRAWINGS

To better understand the invention, one embodiment thereof is described hereinafter by way of non-limiting example and with reference to the accompanying drawings, wherein:
- Figure 1 is a perspective view of a portion of a motor vehicle comprising an air treatment system according to the present invention;
- Figure 2 is a schematic representation of the motor vehicle in Figure 1, with parts removed for clarity;
- Figure 3 is a perspective view of a portion of the motor vehicle in Figure 1, with parts removed for clarity;

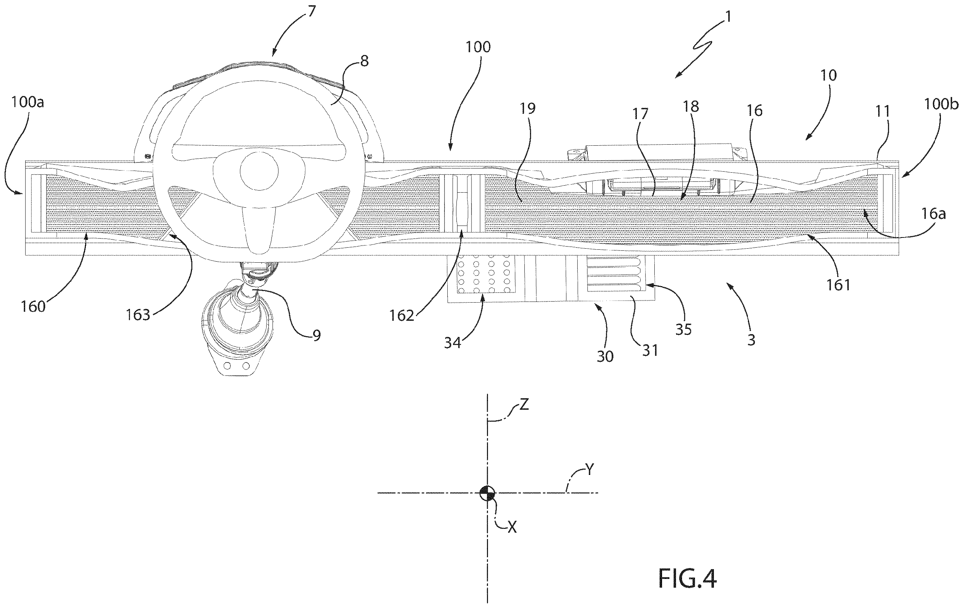

- Figure 4 is a front view of the air treatment system in Figure 1, with parts removed for clarity; and
- Figure 5 is a detail of the motor vehicle portion illustrated in Figure 3.

### EMBODIMENTS OF THE INVENTION

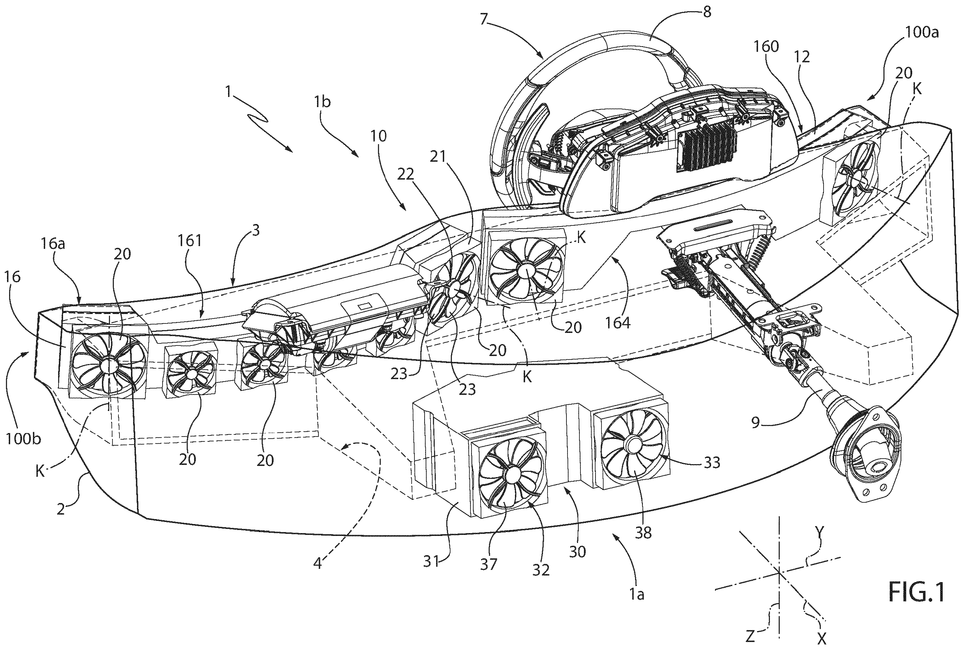

In Figure 1, reference number 1 is used to indicate, as a whole, a motor vehicle, preferably an electric or hybrid motor vehicle, comprising:
- a frame 2,
- a plurality of wheels - not shown - rotatable about respective rotational axes with respect to the frame 2 in order to move the frame 2 with respect to a reference system. The wheels are also rotatable with respect to the frame 2 about respective steering axes, which are transversal to the respective rotational axes; and
- a passenger compartment 3 adapted to accommodate at least one driver and possibly one or more passengers and which is fixed with respect to the frame 2.

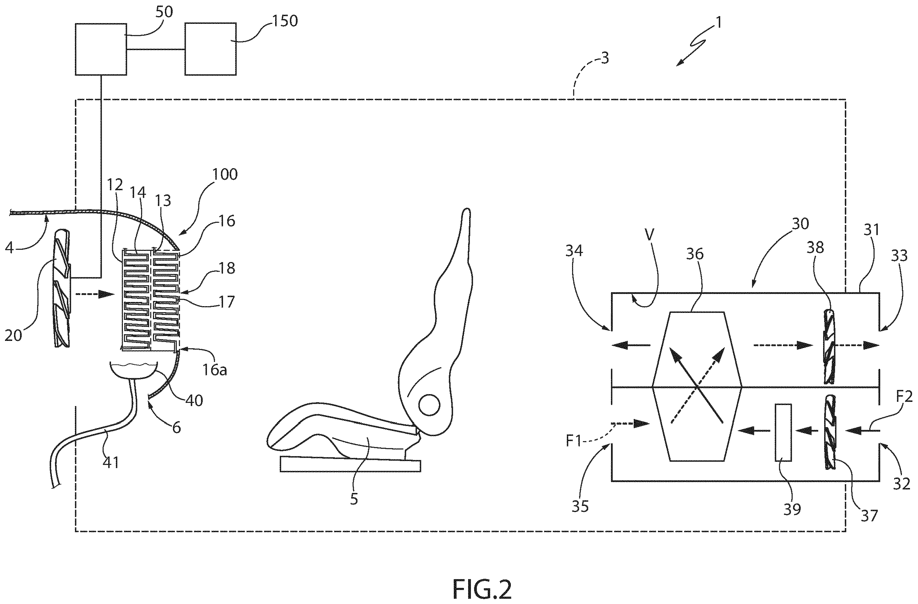

Specifically, the passenger compartment 3 comprises one or more seats 5 for the driver and any passengers (Figure 2) .

The motor vehicle 1 defines a longitudinal extension direction X. It is also possible to define a direction Y transversal to the direction X, and a direction Z orthogonal to the directions X and Y. In detail, the direction Z is vertical with respect to the ground on which the wheels of the motor vehicle 1 rest.

The motor vehicle 1 comprises a front portion 1a and a rear portion 1b opposite each other along the direction X. Specifically, taking into account a normal forward direction of the motor vehicle 1, this forward direction is oriented from the rear portion 1b to the front portion 1a.

The motor vehicle 1 also comprises a steering system 7 adapted to steer at least some of the wheels, i.e., to rotate these wheels about respective steering axes with respect to the frame 2. In detail, the steering system 7 comprises:
- a steering wheel 8 rotatable about a rotational axis thereof with respect to the frame 2;
- a steering shaft 9 rotatable integrally with the steering wheel 8 and adapted to operatively connect the steering wheel 8 to at least some of the wheels of the motor vehicle 1.

The motor vehicle 1 further comprises an air treatment system 10 comprising, in turn:
- a structural element 11, for example a truss or a truss element, fixed to the frame 2 or integrated into the frame 2 and arranged parallel or substantially parallel to the direction Y; and
- two heat exchangers 12, 16 integrated into the structural element or fixed to the structural element 11.

Air treatment refers to the conditioning, dehumidification, heating and/or change of the air contained within the passenger compartment 3.

The heat exchangers 12, 16 comprise passages 13, 18 adapted to be crossed by an air flow and fluidly connected to the passenger compartment 3. In detail, the air passing through the passages 13 and the passages 18 is subjected to a heat exchange by the respective heat exchanger 12, 16.

The passages 13 and 18 are fluidly connected to each other. In other words, the air passing in succession through the passages 13 and 18 is fed into the passenger compartment 3.

The structural element 11 and the heat exchangers 12, 16 define a dashboard 100 of the motor vehicle 1.

In detail, the structural element 11 is a dashboard crosspiece of the motor vehicle 1 and the motor vehicle 1 comprises a compartment 4 opposite to the rear portion 1b with respect to the structural element 11. In other words, the compartment 4 is located behind the dashboard 100.

In further detail, the motor vehicle 1 comprises an opening 6 - only schematically illustrated in Figure 2 - in the dashboard 100, which fluidly connects the compartment 4 to the passenger compartment 3.

The heat exchangers 12 and 16 further comprise passages 14, 17 adapted to be crossed by a thermal carrier fluid adapted to exchange heat with the air flow crossing the passages 13 and 18, respectively.

The heat exchanger 12 is adapted to cool down and/or dehumidify the air passing through the passages 13; the heat exchanger 16 is adapted to warm up the air passing through the passages 18.

In detail, the passages 14 are part of a circuit of the motor vehicle 1, which is adapted to subject the thermal carrier fluid flowing through it to a refrigeration cycle, which is known per se and not shown; the passages 17 are part of a circuit of the motor vehicle 1, which is adapted to subject the thermal carrier fluid flowing through it to a heat pump cycle, which is also known per se and not shown.

The system 10 also comprises a control unit 50 configured to control the activation and deactivation of the refrigeration cycle and/or the heat pump cycle.

As shown in Figure 1, the heat exchanger 16 directly faces the passenger compartment 3; the heat exchanger 12, on the other hand, is opposite the rear portion 1b with respect to the heat exchanger 16. In detail, the heat exchanger 12 is housed in the compartment 4.

In addition, the heat exchangers 12 and 16 are adjacent to each other parallel to direction X. Preferably, the heat exchangers 12 and 16 are in contact with each other parallel to direction X.

Preferably, the structural element 11 extends along the entire extension or most of the extension of the passenger compartment 3 parallel to direction Y. Moreover, the heat exchangers 12 and 16 extend along the entire extension or most of the extension of the structural element 11 parallel to direction Y. "Most" means a percentage greater than 50%, for example, greater than 600, 70%, 80%, or 900.

In detail, the heat exchanger 16 comprises a surface 16a opposite the heat exchanger 12 along direction X. The surface 16a preferably directly faces the one or more seats 5. Specifically, the surface 16a directly faces the backrest of the one or more seats 5.

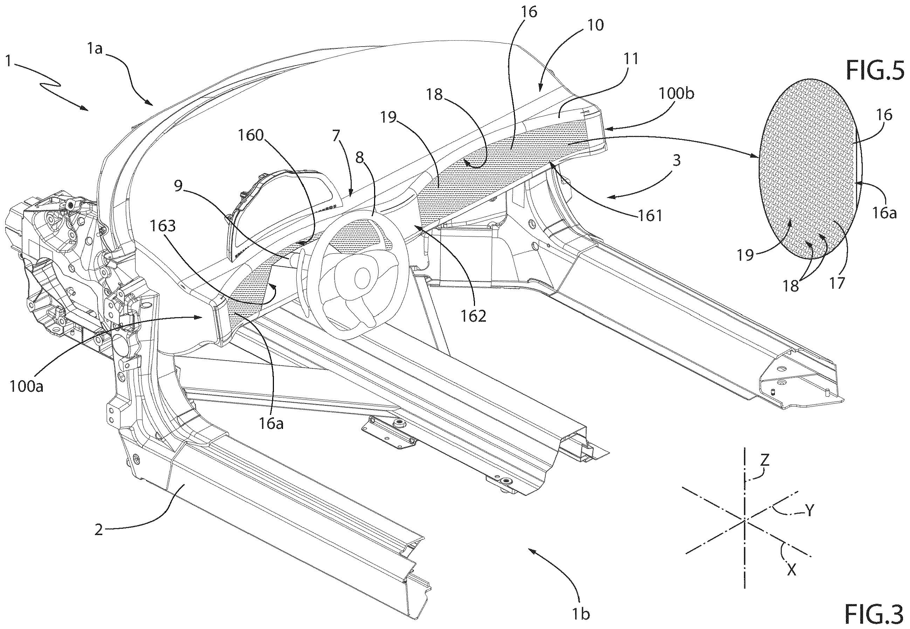

In greater detail, the passages 18 open out into the passenger compartment 3 at the surface 16a and are therefore directly fluidly connected to the passenger compartment 3. In detail, the surface 16a comprises a plurality of openings, at which the passages 18 open out into the passenger compartment 3 (Figure 5).

It is also possible to define two ends 100a, 100b of the dashboard 100 opposite each other parallel to direction Y.

As shown in Figure 3, the surface 16a comprises:
- a section 160 arranged on the side of the end 100a;
- a section 161 arranged on the side of the end 100b; and
- a section 162 interposed between the section 160 and the section 161 parallel to direction Y.

In detail, the sections 160 and 161 are concave and the section 162 is convex with respect to an observer occupying the passenger compartment 3. In further detail, the section 162 does not comprise the passages 18.

Preferably, the sections 160 and 161 have the same length parallel to direction Y. In addition, the sections 160 and 161 are preferably characterized by the same curvature.

The exchangers 12 and 16 further comprise respective through openings 163, 164 parallel to direction X and adapted to be passed through by the steering shaft 9 (Figures 1 and 3). Since Figure 3 shows a right-hand drive vehicle, the openings 163 and 164 are located through the section 160; conversely, in the case of a left-hand drive vehicle, the openings 163 and 164 would be located through the section 161.

Furthermore, the heat exchangers 12 and 16 are preferably made of aluminium alloy and/or noble metals, e.g. silver and/or platinum. Specifically, silver has a purifying effect on the air passing through the relevant heat exchanger 12, 16 and allows efficient heat exchange between the air passing through the respective passages 13, 18 and the thermal carrier fluid passing through the respective passages 14, 17.

Alternatively or additionally, the surface 16a is coated with noble metals, e.g. silver and/or platinum.

In the embodiment shown, the heat exchanger 12 comprises a lattice structure 15 defining the passages 13 and the passages 14; the heat exchanger 16 comprises a lattice structure 19 defining the passages 18 and the passages 17.

The lattice structures 15 and 19 comprise repeated structural elements (e.g., truss elements) defining the passages 13, 18 and the passages 14, 17, respectively. In detail, the passages 14, 17 are defined by ducts of the respective lattice structures 15 and 19, and the passages 13, 18 are defined by the interstices formed between the outer surfaces of these ducts.

Preferably, the lattice structures 15, 19 extend along the entire extension of the respective heat exchangers 12 and 16 parallel to direction X. In addition, at least some of the passages 13 and 18 extend along the entire extension of the respective heat exchangers 12 and 16 parallel to direction X.

Specifically, the lattice structures 15, 19 are manufactured by additive manufacturing, for example by selective laser fusion of metal powders.

Preferably, the ducts defining the passages 14 and 17 comprise gyroid-shaped heat exchange surfaces between the thermal carrier fluid and the air. In addition, the fluid within the passages 14, 17 is fluidly isolated from the air flowing through the passages 13, 18.

The system 10 also comprises a plurality of fans 20 rotatable about respective rotational axes K and adapted to direct and guide the air flow through the passages 13 and 18 towards the passenger compartment 3 (Figure 1).

The fans 20 are spaced apart from each other or adjacent to each other parallel to direction Y and are opposite the rear portion 1b with respect to the heat exchangers 12 and 16. In detail, the fans 20 are arranged in the compartment 4.

In the embodiment shown, the system 10 comprises fans 20 of different sizes.

In detail, each fan 20 comprises (Figure 1):
- a support structure 21;
- a hub 22 rotatable with respect to the support structure 21 about the rotational axis K; and
- a plurality of blades 23 protruding from the hub 22, each along respective axes transversal to the rotational axis K.

Preferably, the hub 22 and the blades 23 are ducted by the support structure 21.

In further detail, the support structure 21 of each fan is fixed to the heat exchanger 12.

The control unit 50 is operatively connected to the fans 20 and configured to control the fans 20 independently of one another. In detail, the control unit 50 is configured to selectively activate or deactivate some or all of the fans 20 - i.e., to command the start or stop of the rotation about the respective rotational axes K. In addition, the control unit 50 is configured to control the variation of the rotational speed of the fans 20 about respective rotational axes K.

The motor vehicle 1 further comprises a user interface 150, for example including a touch screen or one or more knobs or buttons, operatively connected to the control unit 50.

The user interface 150 is usable by the driver and/or passengers to adjust the speed, flow rate, temperature and/or direction of the air flow fed into the passenger compartment 3 through the passages 18. The control unit 50 is configured to receive from the user interface 150 a signal relating to the settings requested by the user and to control the fans 20 and/or the activation or deactivation of the refrigeration cycle or heat pump cycle.

In detail, the user interface 150 is configured to send to the control unit 50 a signal relating to a region of the surface 16a in which the outflow of the air flow passing through the passages 18 must be concentrated. The control unit 50 is configured to activate the fans 20 arranged in said region and to deactivate the fans 20 arranged in the remaining regions of the surface 16a.

In addition, the passages 13, 18 are adapted to be crossed by the air contained, in use, within the motor vehicle 1, in particular in the compartment 4 or passenger compartment 3. Specifically, the passages 13, 18 are not directly fluidly connected to the outside of the motor vehicle 1.

The system 10 further comprises a regenerator 30 adapted to exchange heat between the air contained within the motor vehicle 1 and the air entering the motor vehicle 1.

As schematized in Figure 2, the regenerator 30 comprises a container 31 defining an internal volume V.

The container 31, in turn, comprises:
- an opening 32, which is fluidly connected to the outside of the motor vehicle 1 and adapted to allow the outside air to flow into the internal volume V;
- an opening 33 fluidly connected to the outside of the motor vehicle 1 and adapted to allow air to flow out of the internal volume V;

- an opening 34 adapted to allow the air contained in the internal volume V to flow into the passenger compartment 3 and/or the compartment 4; and
- an opening 35 adapted to allow the air contained within the passenger compartment 3 and/or the compartment 4 to flow into the internal volume V.

The regenerator 30 is adapted to be crossed by an air flow F1 directed from the passenger compartment 3 and/or the compartment 4 towards the outside of the motor vehicle 1 (see the dashed line arrows in Figure 2) and by an air flow F2 directed from the outside of the motor vehicle 1 towards the passenger compartment 3 and/or the compartment 4 (see the solid line arrows in Figure 2). In detail, the air flow F1 flows into the internal volume V through the opening 35 and flows out of the internal volume V through the opening 33; the air flow F2 flows into the internal volume V through the opening 32 and flows out of the internal volume V through the opening 34.

The regenerator 30 also comprises a heat exchange region 36, in which the air flows F1 and F2 exchange heat. For example, the heat exchange region 36 comprises a cross-flow recuperator. In detail, the heat exchange region 36 is contained in the internal volume V.

The regenerator 30 further comprises:
- an inlet fan 37 adapted to draw air from outside the motor vehicle 1 into the internal volume V through the opening 32;
- an exhaust fan 38 adapted to increase the kinetic energy of the air that must flow out of the internal volume V towards the outside of the motor vehicle 1; and
- an air filter 39.

In detail, the fan 37 is fluidly interposed between the opening 32 and the heat exchange region 36 along the fluidic path of the flow F2; the fan 38 is fluidly interposed between the heat exchange region 36 and the opening 33 along the fluidic path of the flow F1; the air filter 39 is fluidly interposed between the fan 37 and the heat exchange region 36 along the fluidic path of the flow F2.

The control unit 50 is operatively connected to the fans 37 and 38 and configured to control said fans independently of one another. Specifically, the control unit 50 is configured to selectively activate or deactivate the fan 37 and/or the fan 38. In addition, the control unit 50 is configured to control the variation of the rotational speed of the fan 37 and/or the fan 38 about respective rotational axes. In further detail, the control unit 50 is configured to control the fans 37 and 38 according to a signal relating to the settings requested by the user via the user interface 150.

The filter 39 is adapted to remove pollen, dust, and other impurities from the air flow F2.

Preferably, the regenerator 30 is arranged at compartment 4. In detail, the regenerator 30 is opposite the heat exchanger 16 in relation to the fans 20 along direction X. However, the regenerator 30 could be arranged in positions other than the position of the compartment 4, provided that the internal volume V is fluidly connected to the compartment 4 or the passenger compartment 3.

The system 10 also comprises a tank 40 adapted to contain the condensation formed at the heat exchanger 12, and a pipe 41 fluidly connected to the tank 40 and adapted to discharge the condensation contained in the tank 40 out of the motor vehicle 1 (Figure 2).

In use, the regenerator 30 carries out the heat exchange between the air contained within the motor vehicle 1 and the air entering the motor vehicle 1.

In detail, the air flow F1 flows into the internal volume V through the opening 35 and reaches the heat exchange region 36. At the same time, the air flow F2 flows into the internal volume V through the opening 32, passes through the filter 39 and reaches the heat exchange region 36.

If the temperature of the air entering through the opening 32 is lower than the temperature of the air entering through the opening 35, the air flow F1 transfers part of its heat to the air flow F2 in the heat exchange region 36. As a result, the air flow F2 is preheated before it enters the compartment 4 through the opening 34.

In detail, the control unit 50 can command the activation of the fans 37 and/or 38 to increase the kinetic energy of the air flows F2 and/or F1, respectively.

In order to increase the temperature inside the passenger compartment 3, the control unit 50 activates the refrigeration cycle and the heat pump cycle. Consequently, the heat exchanger 12 dehumidifies the air flowing through the passages 13 and then the heat exchanger 16 heats the same air as it flows through the passages 18. The heated air then flows out of the passages 18 and directly reaches the passenger compartment 3.

In detail, the control unit 50 can command the activation of some or all of the fans 20 to increase the kinetic energy of the air flow passing through the passages 13 and 18 or to adjust its direction, also according to what has been set by the driver and/or the passengers via the user interface 150.

For example, if the user wants the air flow to flow out in a concentrated manner at the section 160, the control unit 50 activates the fans 20 aligned with the section 160 along direction Y and deactivates all the other fans.

If, however, the temperature of the air entering through the opening 32 is higher than the temperature of the air entering through the opening 35, the air flow F2 transfers part of its heat to the air flow F1 in the heat exchange region 36. As a result, the air flow F2 is pre-cooled before it enters the compartment 4 through the opening 34.

In order to lower the temperature inside the passenger compartment 3, the control unit 50 activates the refrigeration cycle and deactivates the heat pump cycle. As a result, the air flowing through the passages 13 is cooled by the heat exchanger 12. In addition, when the air flows through the passages 18 it undergoes minimal or negligible changes in temperature. The heated air then flows out of the passages 18 and directly reaches the passenger compartment 3.

The advantages of the air treatment system 10 and the motor vehicle 1 according to the invention are clear from the foregoing.

Since the system 10 comprises the structural element 11 and the heat exchangers 12, 16 integrated into or fixed to the structural element 11 and comprising the passages 13, 18 for the air directed to the passenger compartment 3, the heating, ventilation and/or air conditioning within the passenger compartment 3 are improved in several respects.

In detail, the air is fed into the passenger compartment in a distributed manner through the passages 13 and 18 and not in a concentrated manner through openings.

At the same time, the system 10 does not comprise ducts adapted to guide the air from a heat exchanger to openings. Indeed, the air passing through the passages 13 and 18 can exchange heat with the respective exchanger 12, 16 along the entire path up to the passenger compartment 3 and no ducts outside the exchanger 16 are required to guide the air into the passenger compartment 3. This makes it possible to reduce the vibrations and noise associated with the presence of ducts external to the heat exchangers, to avoid complex and costly duct moulding operations and to limit the overall dimensions of the dashboard.

Furthermore, the system 10 plays both a structural function and a heat exchange function. Accordingly, it is possible to reduce the number of components required to carry out the air treatment inside the passenger compartment 3 and thus the weight of the motor vehicle 1, while ensuring the comfort for the occupants.

Since the system 10 comprises the fans 20, it is possible to increase the kinetic energy of the air through the passages 13, 18, in order to feed a directed flow of hot or cold air into the passenger compartment 3.

Since the fans 20 are spaced apart from each other parallel to direction Y and can be controlled independently of one another, it is possible to obtain hot or cold air flows inside the passenger compartment 3 at specific portions of the dashboard 100 or at different speeds.

Since the passages 13, 18 are adapted to be crossed by the air contained within the motor vehicle 1 and since the system 10 comprises the regenerator 30, the heating, cooling and/or dehumidification of the air flowing out of the passages 18 into the passenger compartment 3 are carried out on air not directly coming from the outside of the motor vehicle 1. This allows the exergy losses of the motor vehicle 1 to be limited. In fact, the frigories or calories of the air contained in the motor vehicle 1 - for example, in the passenger compartment 3 or the compartment 4 - are not completely dispersed outside the motor vehicle 1 but are at least partially recovered.

In addition, the two main functions of the known HVAC systems, i.e., heating, dehumidification and/or cooling of the air on the one hand and air exchange on the other, are entrusted to separate and independent portions of the system 10, in particular the heat exchangers 12, 16 and the regenerator 30, respectively.

Lastly, it is clear that modifications and variations may be made to the air treatment system 10 and the motor vehicle 1 according to the invention, without however departing from the scope of protection defined by the claims.

In particular, the number and shape of the components described and illustrated herein could be different, and in particular varied with great freedom.

The system 10 could comprise the heat exchanger 12 alone or the heat exchanger 16 alone, instead of both heat exchangers 12, 16.

The system 10 could comprise one fan 20 only instead of a plurality of fans 20.

The heat exchangers 12 and/or 16 may not comprise the lattice structures 15, 19, but may comprise a tube bundle defining the passages 14, 17. The tube bundle may, in turn, comprise a plurality of interstices between the tubes of the tube bundle, which define the passages 13 and 18.

The heat exchanger 16 could heat the air passing through it via the Joule effect or the Peltier effect.

The system 10 could comprise a plurality of heat exchangers 12 aligned with each other parallel to direction Y and/or a plurality of heat exchangers 16 aligned with each other parallel to direction Y.

The regenerator 30 may comprise a device for sanitizing the air entering through the opening 32.

## Claims

1. A system (10) for treating air for a motor vehicle (1), **characterized by** the fact that it comprises:
- a structural element (11) adapted to be fixed to a frame (2) of said motor vehicle (1) or integrated into said frame (2) and adapted to be arranged along a direction (Y) transversal to a longitudinal direction (X) of said motor vehicle (1);
- at least one heat exchanger (12, 16) integrated into said structural element (11) or fixed to said structural element (11);
said heat exchanger (12, 16) comprising first passages (13, 18) adapted to be crossed, in use, by an air flow; said heat exchanger (12, 16) being configured to subject said air flow to a heat exchange as it crosses said first passages (13, 18);
said first passages (13, 18) being adapted to be fluidly connected to a passenger compartment (3) of said motor vehicle (1).

2. The system according to claim 1, wherein said at least one heat exchanger (12, 16) comprises a surface (16a) adapted to be directly facing said passenger compartment (3); said first passages (13, 18) being adapted to open out at said passenger compartment (3) at said surface (16a).

3. The system according to claim 1 or 2, wherein said heat exchanger (12, 16) extends along the entire extension or the most part of the extension of said structural element (11) parallel to said direction (Y).

4. The system according to any one of the foregoing claims, wherein said heat exchanger (12, 16) comprises second passages (14, 17) adapted to be crossed, in use, by a thermal carrier fluid adapted to exchange heat, in use, with said air flow crossing, in use, said first passages (13, 18).

5. The system according to claim 4, wherein said heat exchanger (12, 16) comprises a lattice structure (15, 19) comprising, in turn, said first passages (13, 18) and said second passages (14, 17); and/or
wherein said heat exchanger (12, 16) comprises a bundle of tubes comprising said second passages (14, 17); the interstices between said tubes defining said first passages (13, 18).

6. The system according to claim 5, wherein said lattice structure (15, 19) is manufactured, in use, by additive manufacturing.

7. The system according to any one of the foregoing claims, comprising:
- at least one fan (20) rotatable about a rotational axis (K) and adapted to guide said air flow towards said passenger compartment (3) through said first passages (13, 18); and
- a control unit (50) operatively connected to said at least one fan (20).

8. The system according to claim 7, comprising a plurality of said fans (20);
said control unit (50) being configured to control said fans (20) independently of one another.

9. The system according to claim 8, wherein said control unit (50) is configured to selectively activate, in use, some or all of said fans (20) and/or to vary the rotational speed of some or all of said fans (20) about the respective said rotational axes (K).

10. The system according to any one of claims 7 to 9, wherein said at least one fan (20) is adapted to be arranged opposite to said passenger compartment (3) with respect to said at least one heat exchanger (12, 16).

11. The system according to any one of claims 7 to 10 when depending on claim 2, comprising a user interface (150) operatively connected to said control unit (50);
said user interface (150) being configured to send, in use, to said control unit (50) a signal relating to a region of said surface (16a), at which the outflow of said air flow into said passenger compartment (3) must be concentrated, in use;
said control unit (50) being configured to activate, in use, one or more fans (20) arranged at said region and to deactivate, in use, one or more fans (20) arranged at the remaining regions of said surface (16a).

12. The system according to any one of the foregoing claims, **characterized by** the fact that said first passages (13, 18) are adapted to be crossed, in use, by the air contained, in use, within said motor vehicle (1);
said system (10) further comprising a regenerator (30) adapted to exchange heat between the air contained, in use, within said motor vehicle (1) and the air entering, in use, said motor vehicle (1).

13. The system according to any one of the foregoing claims, **characterized by** the fact that said heat exchanger (12, 16) is made of Aluminium and/or Silver and/or Platinum.

14. The system according to any one of the foregoing claims, comprising:
- a first said heat exchanger (12) adapted to cool down and/or dehumidify said air flow passing, in use, through said respective first passages (13); and
- a second said heat exchanger (16) adapted to warm up said air flow passing, in use, through said respective first passages (18).

15. A motor vehicle (1) comprising:
- a frame (2);
- a passenger compartment (3), which is fixed with respect to said frame (2);
- a system (10) for treating air according to any one of the foregoing claims.

16. The motor vehicle according to claim 15, wherein said structural element (11) and said at least one heat exchanger (12, 16) define a dashboard (100) of said motor vehicle (1).
